# EUROPEAN PATENT APPLICATION

(11) **EP 4 661 411 A1**
(43) Date of publication of application: **10.12.2025**
(21) Application number: 24749763.9
(22) Date of filing: 02.02.2024
(51) Int. Cl.: H04N 21/485

(54) **METHOD AND APPARATUS FOR LIVE STREAMING INTERACTION, DEVICE, AND STORAGE MEDIUM**

(30) Priority: 02.02.2023 CN 202310050932
(71) Applicant: Chengdu Guanghexinhao Technology Co., Ltd., Chengdu, Sichuan 610095 (CN)
(72) Inventor: WANG, Wenjun, Beijing 100028 (CN); WU, Hanfei, Beijing 100028 (CN); CHEN, Chen, Beijing 100028 (CN); LI, Qianwen, Beijing 100028 (CN)
(74) Representative: Grünecker Patent- und Rechtsanwälte PartG mbB
(86) International application number: PCT/CN2024/075605
(87) International publication number: WO 2024/160288

(57) **Abstract**

A live streaming interaction method, apparatus, device, and a storage medium are provided. The method includes: if live streaming content in a live streaming satisfies a predetermined condition, presenting an interactive interface element in a user interface of the live streaming, the interactive interface element relating to question-and-answer interaction (210); and in response to detecting a predetermined operation on the interactive interface element, providing a streamer of the live streaming with interaction information corresponding to the question-and-answer interaction (220). According to the method, the streamer and the audience user can conveniently and effectively interact with each other, enriching live streaming interaction channels.

## Description

This application claims the priority of Chinese Patent Application No. 202310050932.6 entitled "Method, Apparatus, Device, and Storage Medium for Live Streaming Interaction" and filed on February 2, 2023, the entirety of which is incorporated herein by reference.

### FIELD

Example embodiments of the present disclosure generally relate to the field of computers, and in particular, to methods, apparatus, device, and computer-readable storage medium for live streaming interaction.

### BACKGROUND

With the development of computer technology, more and more applications can also provide live streaming content. A wide variety of live streaming can provide people with content in various aspects such as information, education, life and entertainment. During the live streaming process, the streamer and the audience user can perform a variety of interactions, which can help the streamer determine the subsequent live streaming direction, and the effective interaction can bring required information for more audience users.

### SUMMARY

In a first aspect of the present disclosure, a method for live streaming interaction is provided. The method comprises the following steps: if live streaming content in a live streaming satisfies a predetermined condition, presenting an interactive interface element in a user interface of the live streaming, the interactive interface element relating to a question-and-answer interaction; and in response to detecting a predetermined operation on the interactive interface element, providing a streamer of the live streaming with interaction information corresponding to the question-and-answer interaction.

In a second aspect of the present disclosure, an apparatus for live streaming interaction is provided. The apparatus comprises: an element presentation module configured to present an interactive interface element in a user interface of a live streaming if the live streaming content in the live streaming satisfies a predetermined condition, the interactive interface element relating to a question-and-answer interaction; and an interaction providing module configured to provide a streamer of the live streaming with interaction information corresponding to the question-and-answer interaction in response to detecting a predetermined operation on the interactive interface element.

In a third aspect of the present disclosure, an electronic device is provided. The device includes at least one processing unit; and at least one memory coupled to the at least one processing unit and storing instructions for execution by the at least one processing unit. The instructions, when executed by the at least one processing unit, cause the device to perform the method of the first aspect.

In a fourth aspect of the present disclosure, a computer-readable storage medium is provided. The medium stores a computer program which, when executed by a processor, implements the method in the first aspect.

It should be understood that the content described in the summary section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments of the present disclosure can be implemented;
FIG. 2 illustrates a flowchart of a process for live streaming interaction according to some embodiments of the present disclosure;
FIG. 3A illustrates a schematic diagram of a first example page related to live streaming interaction according to some embodiments of the present disclosure;
FIG. 3B illustrates a schematic diagram of a second example page related to live streaming interaction according to some embodiments of the present disclosure;
FIG. 3C illustrates a schematic diagram of a third example page related to live streaming interaction according to some embodiments of the present disclosure;
FIG. 3D illustrates a schematic diagram of a fourth example page related to live streaming interaction according to some embodiments of the present disclosure;
FIG. 3E illustrates a schematic diagram of a fifth example page related to live streaming interaction according to some embodiments of the present disclosure;
FIG. 3F illustrates a schematic diagram of a sixth example page related to live streaming interaction according to some embodiments of the present disclosure;
FIG. 4 illustrates a block diagram of an apparatus for live streaming interaction according to some embodiments of the present disclosure; and
FIG. 5 illustrates an electronic device in which one or more embodiments of the present disclosure may be implemented.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms and should not be construed as limited to the embodiments set forth herein, but rather, these embodiments are provided for a more thorough and complete understanding of the present disclosure. It should be understood that the drawings and embodiments of the present disclosure only play an illustrative role and are not intended to limit the scope of protection of the present disclosure.

In the description of the embodiments of the present disclosure, term "comprise" and the like should be understood as an open-ended, i.e., "comprise but not limited to". Term "based on" should be understood as "based at least in part on". Term "one embodiment" or "the embodiment" should be understood as "at least one embodiment". Term "some embodiments" should be understood as "at least some embodiments". Other explicit and implicit definitions may also be included below.

Herein, unless explicitly stated, performing one step "responding to A" does not mean that the step is performed immediately after "A", but may include one or more intermediate steps.

It may be understood that data (including but not limited to the data itself, the obtaining or use of the data) involved in the technical solution should follow the requirements of the corresponding laws and regulations and related stipulations.

It can be understood that, before the technical solutions disclosed in respective embodiments of the present disclosure are used, types, usage scope, usage scenario and the like of personal information involved in the present disclosure should be notified to the user in an appropriate manner according to relevant laws and regulations and the user's authorization should be obtained.

For example, in response to receiving an active request from a user, prompt information is sent to the user to explicitly prompt the user that the requested operation will need to obtain and use personal information of the user, so that the user can autonomously choose, according to the prompt information, whether to provide personal information to software or hardware such as the electronic device, application program, server, storage medium executing the operation of the technical solution of the present disclosure or not.

As an optional but non-limiting implementation, in response to receiving an active request of the user, a manner of sending prompt information to the user may be, for example, a pop-up window, and the prompt information may be presented in a text manner in the pop-up window. In addition, the pop-up window may further carry a selection control for the user to select "agree" or "not agree" to provide personal information to the electronic device.

It may be understood that the foregoing processes of notifying the user and obtaining the user's authorization are merely illustrative, and do not constitute a limitation to implementations of the present disclosure, and other manners of meeting relevant laws and regulations may also be applied to implementations of the present disclosure.

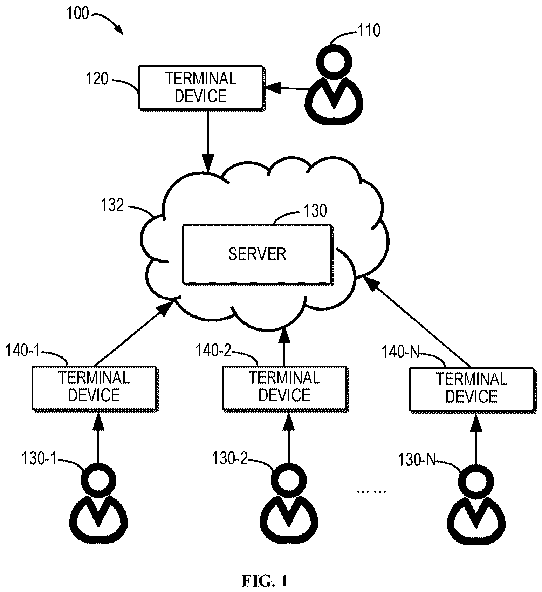

FIG. 1 illustrates a schematic diagram of an example environment 100 in which embodiments of the present disclosure can be implemented. In the example environment 100, user 110 may establish a live streaming and initiate a live streaming through an associated terminal device 120. One or more users 130-1, 130-2, ...,130-N can watch the live streaming via their respective associated terminal devices 140-1, 140-2, ...,140-N. For ease of discussion, users 130-1, 130-2, ...,130-N may be collectively or separately referred to as user 130, and terminal devices 140-1, 140-2, ...,140-N may be collectively or separately referred to as terminal device 140.

In a live streaming scenario, the user 110 may be referred to as a streamer (or simply "streamer"), and the user 130 may be referred to as an audience user (or simply "audience"). Although only a single streamer is shown, in some embodiments, there may be multiple streamers that initiate live streaming in a live streaming.

In some embodiments, applications capable of providing a live streaming function may be mounted on each of the terminal devices 120 and 140, or the terminal devices 120 and 140 may access a website capable of providing a live streaming function. Users 110, 130 may operate terminal devices 120, 140 to access corresponding applications or websites. In some embodiments, the terminal devices 120 and 140 may further communicate with the server 130 via the network 132, to provide the live streaming service. The server 130 may provide functions such as management, configuration, and maintenance of applications or websites.

The terminal devices 120, 140 may be any type of mobile terminal, fixed terminal, or portable terminal, including mobile handsets, desktop computers, laptop computers, notebook computers, netbook computers, tablet computers, media computers, multimedia tablets, personal communication systems (PCS) devices, personal navigation devices, personal digital assistants (PDAs), audio/video players, digital cameras/camcorders, television receivers, radio streaming receivers, electronic book devices, gaming devices, or any combination of the foregoing, including accessories and peripherals of these devices, or any combination thereof. In some embodiments, terminal devices 120, 140 can also support any type of interface for a user (such as a "wearable" circuit, etc.). The server 130 may be various types of computing systems/servers capable of providing computing power, including, but not limited to, mainframes, edge computing nodes, computing devices in a cloud environment, and the like.

It should be understood that the structures and functions of the various elements in the environment 100 are described for illustrative purposes only and do not imply any limitation to the scope of the present disclosure.

In a live streaming process, an audience user may interact with a streamer. Currently, a streamer queries or initiates an interactive question to an audience user through voice, and the audience user feeds back to the streamer through a public screen comment. The streamer learns the intention of the audience according to the comment information. However, such interaction has many deficiencies. For a streamer, since there may always be a new audience user joining in the live streaming, the streamer needs to frequently and repeatedly query. In addition, when the number of audiences and the number of comments in the live streaming are large, comments related to the current interaction may be overwhelmed by other irrelevant comments, making it easy for the streamer to ignore certain interactive answers.

According to an embodiment of the present disclosure, an improved solution for live streaming interaction is provided. According to the solution of the embodiment of the invention, if the live streaming content in the live streaming satisfies a predetermined condition, the presentation of the interactive interface element is automatically triggered. The audience user may provide the streamer with interaction information corresponding to the predetermined operation through a predetermined operation on the interactive interface element. In this way, the streamer and the audience user can interact with each other conveniently and effectively, enriching channels for live streaming interaction.

Some example embodiments of the present disclosure will be described below with continued reference to the accompanying drawings.

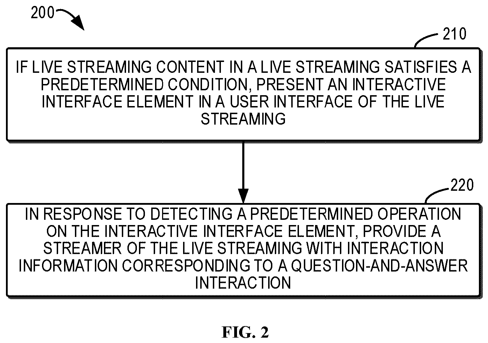

FIG. 2 illustrates a flowchart of a process 200 for live interaction according to some embodiments of the present disclosure. For ease of discussion, the process 200 will be described with reference to the environment 100 of FIG. 1. Process 200 may be implemented at terminal device 140 of audience user 130.

In block 210, if the live streaming content in the live streaming satisfies a predetermined condition, the terminal device 140 presents an interactive interface element in the user interface of the live streaming.

The terminal device 140 may present live streaming content of a live streaming, the live streaming may be maintained by a specific one or more streamers, and present live streaming contents related to streamer(s). For example, streamer(s) may perform various actions in the live streaming, communicate with audience user(s), and the like.

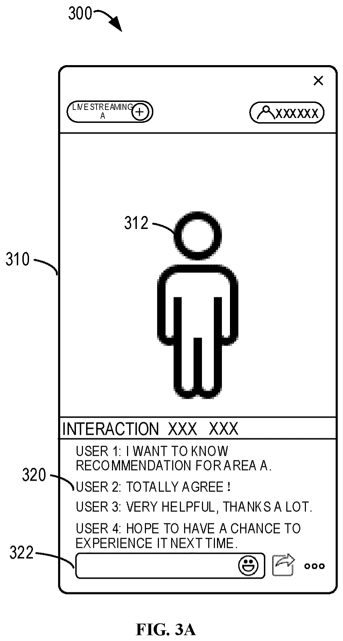

FIG. 3A illustrates an example user interface 300 of a live streaming. The user interface 300 may be a user interface of a live streaming presented on the audience user 130 side. The user interface 300 may include a presentation area 310 of live streaming content and an interaction area 320. The presentation area 310 may include live streaming contents related to the streamer 312, and the live streaming content may change with the operation of the streamers. User comments made by the current audience user and other audience users may be presented in an interactive area 320. The audience user may send the user comment through input box 322. It should be noted that the user interface of FIG.3A is merely an example, and in other examples, the interaction area 320 and the presentation area 310 of the live streaming content may have other layout manners, for example, the interaction area may be superimposed on top of the live streaming content and presented, or may be hidden according to user operation. These layout manners may all be designed according to practical applications.

It should be understood that the user interfaces in FIG. 3A and other figures that will be described below are merely examples, and practically, various interface designs may exist. Individual graphical elements in a user interface may have different arrangements and different visual representations, one or more of which may be omitted or replaced, and there may also be one or more other elements. Embodiments of the present disclosure are not limited in this respect.

In an embodiment of the present disclosure, the streamer may be allowed to trigger an interaction with an audience user by controlling the live streaming content in the live streaming. Live streaming content for triggering interaction may include audio content, video content, images, and the like.

The interactive interface element relates to a question-and-answer interaction. In a live streaming process, some streamers generally desire to have more interactions with audience users and continue the live streaming according to the audience user's feedback. In some examples, the interactive interface element may be displayed with a question that the streamer desires to be initiated from the audience user side in the live streaming process. Through the operation on the interactive interface element, each audience user may reply to the streamer. The replied content forms interaction information and is fed back to the streamer side.

The interactive interface element presented may represent an interface element that a user may operate to accomplish an interaction by clicking, sliding, hovering, or the like. In some embodiments, such interactive interface elements in the live streaming may also be referred to as interactive props, interaction props, and the like. The visual style of the interface element may be customized. The predetermined condition for triggering presentation of the interactive interface element may be configured either before the start of the live streaming or during the live streaming process.

In some embodiments, the live streaming content of a predetermined condition capable of triggering interaction may be related to the audio content, for example, may include a predetermined voice password. That is, the streamer may automatically trigger presentation of an interactive interface element at the terminal device 140 of the audience user by sending the predetermined voice password. During the live streaming process, an audio signal in the live streaming content may be detected, and whether a predetermined voice password is detected may be determined. Upon detecting the predetermined voice password, the interactive interface element may be presented at the audience user's terminal device 140.

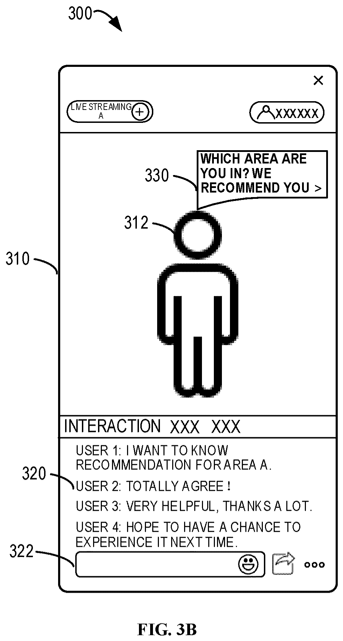

FIG.3B illustrates an example of triggering an interactive interface element during live interaction. As shown in FIG. 3B, if the streamer 312 issues a voice password "Which area are you in" or "Where are you", an interactive interface element 330 may be presented at the audience user's terminal device 140, which prompts the user "Which area are you in? We recommend you". The interactive interface element 330 may support user clicks.

In some embodiments, the live streaming content of a predetermined condition capable of triggering interaction may include a voice password corresponding to a specific text. In the detection process, a voice signal of the streamer can be converted into text, and whether the converted text can be matched with the text corresponding to the predetermined voice password can be determined. The text matching herein may adopt an exact matching manner or a fuzzy matching manner, which is not specifically limited in the embodiments of the present disclosure. In some embodiments, a real-time voice signal of the streamer may be matched with the voice signal corresponding to the predetermined voice password directly on the basis of the sound signal. In some embodiments, a plurality of predetermined voice passwords may be pre-configured to trigger a certain interactive interface element. For example, either of the voice passwords "Which area are you in" and "Where are you" may trigger an interactive interface element as shown in FIG. 3B.

In some embodiments, alternatively or additionally, the live streaming content of a predetermined condition capable of triggering interaction may be related to the video content of the live streaming, for example, the video content corresponding to a predetermined posture. The predetermined posture may be, for example, a posture of a streamer or a user or an object of another live streaming. In some embodiments, the predetermined posture may be, for example, a predetermined gesture, a predetermined body posture, a combination of one or more of the foregoing, and the like. In some embodiments, the predetermined posture may be a static posture, or a dynamic posture (e.g., change of a posture over a period of time, etc.). In other words, presentation of the interactive interface element may be automatically triggered by making some predetermined posture. In the live streaming process, it may be determined whether video contents of the live streaming include a video content corresponding to the predetermined posture, so as to determine whether the predetermined condition for triggering interaction is met.

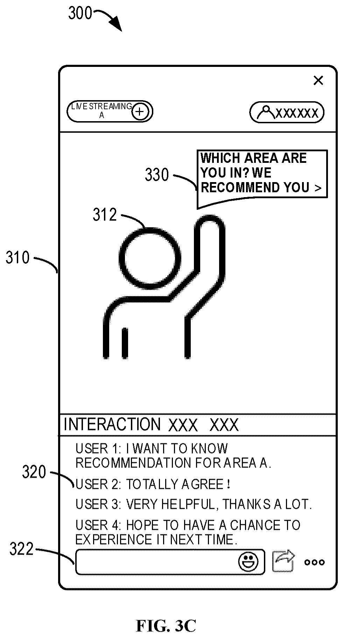

FIG.3C illustrates an example of triggering of an interactive interface element during live interaction. As shown in FIG. 3C, if the streamer 312 makes a posture of raising his/her left hand high, an interactive interface element 330 may be presented at the terminal device 140 of the audience user, which prompts the user "Which area are you in? We recommend you". The interactive interface element 330 may support user clicks.

In addition to voice password and posture, other live streaming content may be configured to automatically trigger presentation of interactive interface elements. In some embodiments, the predetermined condition capable of triggering interaction may also be a combination of multiple types of contents. For example, if the live streaming content includes an item that the streamer holds an item containing a particular text, presentation of the interactive interface element will be triggered. The predetermined condition combines the status of the streamer and the text information in the user interface. As another example, the predetermined condition may include a combination of a predetermined voice password and a predetermined gesture.

In some embodiments, the association relationship between the plurality of different predetermined conditions related to the live streaming content and the different interactive interface elements may be configured. In this way, the streamer may trigger different interactive interface elements by controlling different live streaming contents. In some embodiments, a predetermined condition and an interactive interface element that can be triggered by the predetermined condition may be configured for a specific live streaming. In some embodiments, specific content, style, and available interaction information of the interactive interface element may be configured, for example, may be configured by the streamer or configured by other operators of the live streaming.

In the embodiments of the present disclosure, presentation of the interactive interface element is automatically triggered by the live streaming content, and for the streamer, the interaction with the audience can be conveniently and quickly triggered according to requirements of the live streaming, and meanwhile, the current live streaming content will not be affected.

In some embodiments, detection of the live streaming content may be specifically performed by different entities to determine whether the live streaming content satisfies a predetermined condition. In some embodiments, the live streaming content may be detected by the terminal device 120 associated with the streamer on the streamer side to determine whether the live streaming content satisfies a predetermined condition, and the detection result may be sent to the terminal device 140 associated with the audience user. In some embodiments, the live streaming content may be detected by the server 130, and the detection result may be sent to the terminal device 140. Alternatively, detection of the live streaming content may also be performed by the terminal device 140. Embodiments of the present disclosure are not limited in this regard.

In some embodiments, the terminal device 140 may present an interactive interface element in association with a display area corresponding to the streamer in a user interface of the live streaming. A relatively large amount of interface elements may be presented in a user interface of a live streaming, and different interface elements have different usages. The interface element triggered by the live streaming content meeting a predetermined condition is an interface element by which the streamer expects to interact with the audience user, so that the interface element is presented in a display area corresponding to the live streaming user, which facilitates the user to notice the existence of the interface element more easily, and makes it easier to stimulate enthusiasm for interaction.

In some embodiments, when the interactive interface element is presented, additionally or alternatively, the display area of the interactive interface element in the user interface may also be determined based on the type of the live streaming content meeting a predetermined condition, and the interactive interface element may be presented in the determined display area. Different types of live streaming contents may trigger display of interactive interface elements in different display areas.

As shown in FIGS. 3B and 3C, the interactive interface elements 330 may each be presented near a display area corresponding to the streamer 312. In the example of FIG. 3B, the streamer triggers presentation of the interactive interface element through a predetermined voice password, and the interactive interface element 330 may be presented near the streamer's head. In the example of FIG. 3C, the streamer triggers presentation of the interactive interface element through a left-hand gesture, and the interactive interface element 330 may be presented near the display area where the left-hand gesture of the streamer is located. In this way, the audience user may follow the voice and/or posture of the streamer, notice the presence of the interactive interface element, and thus enthusiasm for interaction can be stimulated.

After the interactive interface element is presented, the terminal device 140 may detect an operation of the current user on the interactive interface element. In some embodiments, the audience user may select a corresponding interface element by clicking, sliding a finger, hovering, etc. Provide of interaction information will be triggered by a predetermined operation on the interactive interface element.

In block 220, in response to detecting a predetermined operation on the interactive interface element, the terminal device 140 provides predetermined interaction information to a device associated with the streamer.

In some embodiments, in response to detecting a predetermined operation on the interactive interface element, the terminal device 140 may present another interactive interface element, and the other interactive interface element includes at least interaction information. This may facilitate the audience user to confirm the interaction information to be provided to the streamer. In response to detecting selection of another interactive interface element, the terminal device 140 may provide interaction information corresponding to the predetermined operation.

In some embodiments, executable operations for the interactive interface element and a question-and-answer type of interaction information corresponding to each executable operation may be pre-configured. This may be configured by the streamer and/or the operator of the live streaming. In some embodiments, another interactive interface element includes an authorization request for information associated with the audience user. For the interactive interface element, the executable operations may include a rejection of the authorization request, or a permission for the authorization request. If the terminal device 140 detects a permission for the authorization request, the interaction information associated with the audience user may be provided to the terminal device of the streamer in response to the audience user request. The associated interaction information may be area information where the audience user is currently located, or may be information of area other than currently located area input by the audience user. The terminal device is, for example, the terminal device 120, to facilitate the streamer to learn an interaction situation of the audience user.

The associated information expected to be fed back by the audience user in the live streaming may be various, or may be configured according to different live streamings and different live streaming types. In some embodiments, the information associated with the audience user may include area information corresponding to the audience user triggering a movement operation for the interactive interface element. As shown in the examples of FIGS. 3B and 3C, the streamer may desire to make a query about the area where the user is located, thereby facilitating recommendation of contents related to the area where the user is located, such as a food store, a play facility, and the like.

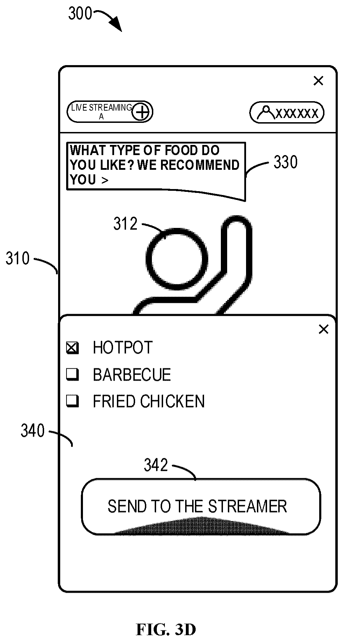

In some embodiments, the presented interactive interface element may include one or more question-and-answer options, and each question-and-answer option represents corresponding interaction information. The audience user may select one or more of the question-and-answer options. By presenting these question-and-answer options, the audience user may select a corresponding option to indicate the interaction information expected to be provided. Such an example is shown in FIG. 3D. In this example, it is assumed that the interactive interface element 330 triggered by the streamer through the predetermined live streaming content indicates "What type of food do you like? We recommend you". After the audience user clicks or selects the interactive interface element, another interactive interface element 340 may be presented, wherein a plurality of question-and-answer options are presented. The audience user may select one of the options and submit a content corresponding to the selected option by selecting a button 342. In some embodiments, the triggered interactive interface element 330 may directly present a question "What type of food do you like" and a corresponding question-and-answer option.

In some embodiments, unlike the example of FIG. 3D, interaction information to be provided, such as information associated with an audience user or a plurality of question-and-answer options, may be displayed in an interactive interface element triggered by live streaming content (e.g., the interactive interface element 330 of FIGS. 3B and 3C). In this way, the audience user may directly provide the corresponding interaction information to the terminal device associated with the streamer by one interaction with the interactive interface element. This interaction manner may be set according to actual needs.

In some embodiments, alternatively or additionally, the interactive interface element includes at least one edit entry. The audience user may also input interaction information through at least one edit entry. The interaction information input through the at least one edit entry may be provided to the streamer.

In the embodiments of the present disclosure, by interacting with the interactive interface element in the user interface, it is convenient for the audience user to make an interaction, and the interaction question of the streamer can be determined without carefully listening to the voice of the streamer. The interactive interface elements may be presented for a certain time, facilitating interactions of audience users joined into the live streaming at different times.

In some embodiments, the interaction information provided by the terminal device of the audience user in the live streaming may be aggregated with the interaction information of other users in the live streaming to obtain aggregated interaction information. Aggregated interaction information may be presented at the terminal device 120 associated with the streamer, and/or may be presented at the terminal device 140 associated with the audience user. Interaction information may be aggregated in various ways depending on the specific type of interaction information and actual needs, and aggregated information may be presented in a variety of ways. Through presentation of the aggregated interaction information, for the streamer, the interaction result of an audience user can be determined without a need to view user comments or interaction feedback piece by piece, and an aggregated interaction result can be viewed more intuitively and conveniently. For the audience user, the interaction result in the live streaming may also be obtained.

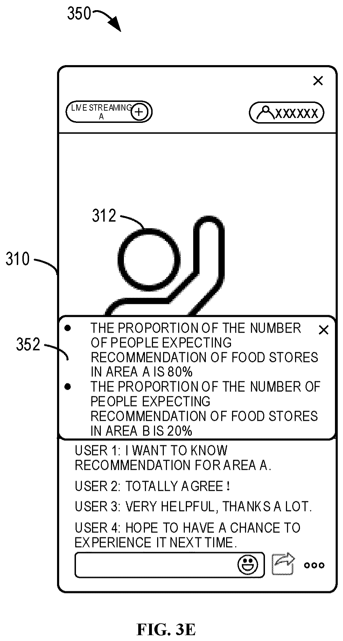

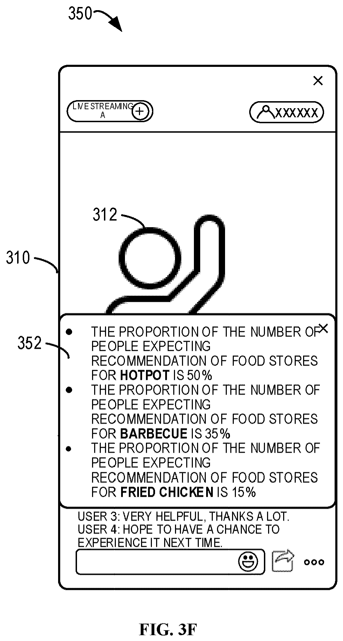

FIG. 3E illustrates an example user interface 350 presented at a terminal device of a streamer or audience user. It is assumed that audience users authorize to provide corresponding area information in the example of FIG. 3C. Area information from a plurality of audience users is aggregated and presented in a pop-up window 352 which indicates, for example, the proportion of the number of audience users in area A is "80%" and the proportion of the number of audience users in area B is "20%". FIG. 3F illustrates an example user interface 350 presented at the terminal device of a streamer or an audience user. It is assumed that in the example of FIG. 3D, the audience user selects different options for interaction, and the selection of these options are aggregated and presented in the pop-up window 352 of the terminal device to indicate the proportion of the number of users selecting different options. By aggregating interaction information from the audience user, the streamer can learn different hotness of interaction and can perform subsequent interaction accordingly.

In some embodiments, resource recommendation related to aggregated interaction information may be automatically provided in the live streaming based on the aggregated interaction information for the specific interactive interface element. The resource recommendation may be provided to the terminal device 140 of the audience user and/or the terminal device 120 of the streamer. In some embodiments, if interaction information includes area information corresponding to the audience user of the live streaming, resource recommendation related to each area may be provided. In some embodiments, the resource recommendation may include recommendation of a topic. For example, the topic of a live streaming to be discussed subsequently may be recommended to the streamer based on aggregated interaction information of audience users in the live streaming. For example, in the example of FIG. 3E, a topic related to area A and/or a topic which a user in area A is interested in may be recommended to be discussed. Of course, recommendation of a topic may also be presented to an audience user. In some embodiments, additionally or alternatively, the resource recommendation may include recommendation of a physical item or a virtual item. For example, in the example of FIG. 3F, stores, commodities, and the like related to "hotpot" may be recommended.

In some embodiments, in addition to the specific recommended contents, the ranking, presentation manner, and the like of the recommended resources may also be determined and presented based on the aggregated interaction information. For example, the resource corresponding to area or option with high interaction hotness may be ranked higher or presented in a more significant manner.

Only some examples of recommendable resources are given above, in other embodiments, recommendations of other resources may also be determined and provided based on aggregated interaction information, and specific manners of making recommendations may be determined. Embodiments of the present disclosure are not limited in this regard.

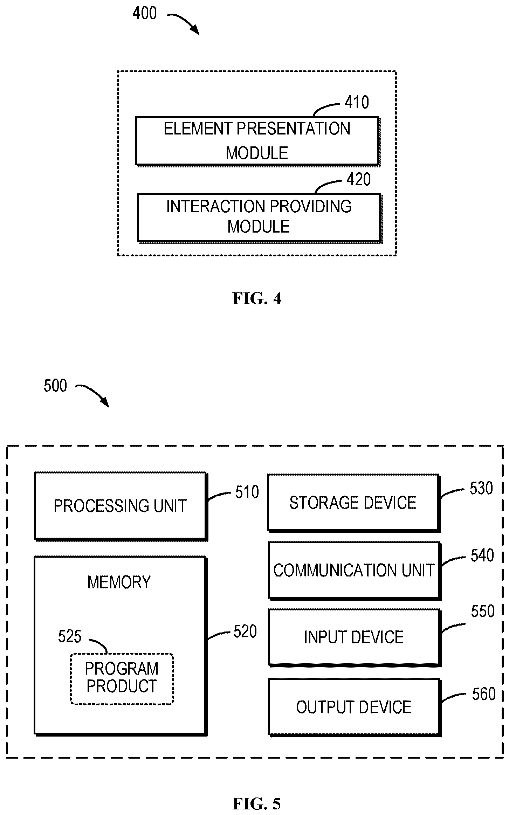

FIG. 4 is a schematic structural block diagram of an apparatus 400 for live streaming interaction according to some embodiments of the present disclosure. The apparatus 400 may be implemented or included in the terminal device 140. Various modules/components in the apparatus 400 may be implemented by hardware, software, firmware, or any combination thereof.

The apparatus 400 includes an element presentation module 410 configured to present an interactive interface element in a user interface of a live streaming if live streaming content in the live streaming satisfies a predetermined condition, the interactive interface element relating to a question-and-answer interaction. The apparatus 400 further includes an interaction providing module 420 configured to, in response to detecting a predetermined operation on the interactive interface element, provide, to a streamer of the live streaming, interaction information corresponding to the question-and-answer interaction.

In some embodiments, the element presentation module 410 includes: a voice-based presentation module configured to present the interactive interface element in the user interface of the live streaming if an audio content of the live streaming includes a predetermined voice password.

In some embodiments, the element presentation module 410 includes: a posture-based presentation module configured to present the interactive interface element in the user interface of the live streaming if video contents of the live streaming include a video content corresponding to a predetermined posture.

In some embodiments, the element presentation module 410 includes: a streamer association presentation module configured to present the interactive interface element in association with a display area corresponding to the streamer in the user interface.

In some embodiments, the element presentation module 410 includes: an area determination module configured to determine a display area of the interactive interface element in the user interface based on a type of the live streaming content meeting a predetermined condition; and an area-based presentation module configured to present the interactive interface element in the determined display area.

In some embodiments, the interaction information includes area information corresponding to the audience user of the live streaming that triggers a predetermined operation. In some embodiments, the interactive interface element includes at least one question-and-answer option, and the interaction information includes interaction information corresponding to the selected one of the at least one question-and-answer options. In some embodiments, the interactive interface element includes at least one edit entry and the interaction information includes interaction information input through the at least one edit entry.

In some embodiments, the apparatus 400 further includes an aggregation presentation module configured to present aggregated interaction information in the user interface of the live streaming, the aggregated interaction information being obtained by aggregating a plurality of pieces of interaction information in the live streaming.

In some embodiments, the apparatus 400 further includes: a recommendation provide module configured to provide resource recommendation related to the aggregated interaction information in the live streaming.

In some embodiments, the resource recommendation includes at least one of the following: recommendation of the topic, recommendation of a physical item or a virtual item.

FIG. 5 illustrates a block diagram of an electronic device 500 in which one or more embodiments of the present disclosure may be implemented. It should be understood that the electronic device 500 illustrated in FIG. 5 is merely illustrative and should not constitute any limitation on the function and scope of the embodiments described herein. The electronic device 500 shown in FIG. 5 may be configured to implement the terminal device 140 or the terminal device 120 in FIG. 1.

As shown in FIG. 5, the electronic device 500 is in the form of a general-purpose electronic device. Components of the electronic device 500 may include, but are not limited to, one or more processor or processing unit 510, a memory 520, a storage device 530, one or more communication unit 540, one or more input device 550, and one or more output device 560. The processing unit 510 may be an actual or virtual processor and can perform various processes according to program(s) stored in the memory 520. In a multi-processor system, multiple processing units execute computer-executable instructions in parallel to improve the parallel processing capability of electronic device 500.

The electronic device 500 typically includes a plurality of computer storage mediums. Such mediums may be any available medium accessible to the electronic device 500, including, but not limited to, volatile and non-volatile medium, removable and non-removable medium. The memory 520 may be a volatile memory (e.g., register, cache, random access memory (RAM)), a non-volatile memory (e.g., read-only memory (ROM), electrically erasable programmable read-only memory (EEPROM), flash memory), or some combination thereof. The storage device 530 may be a removable or non-removable medium and may include a machine-readable medium, such as flash drive, magnetic disk, or any other medium which may be capable of storing information and/or data (e.g., trained data for training) and may be accessed within the electronic device 500.

The electronic device 500 may further include additional removable/non-removable, volatile/non-volatile storage medium. Although not shown in FIG. 5, a disk drive for reading or writing from a removable, non-volatile magnetic disk (e.g., a "soft disk") and an optical disk drive for reading or writing from a removable, non-volatile optical disk may be provided. In these cases, each drive may be connected to a bus (not shown) by one or more data medium interfaces. The memory 520 may include a computer program product 525 having one or more program modules configured to perform various methods or actions of various embodiments of the present disclosure.

The communication unit 540 is implemented to communicate with another electronic device through a communication medium. Additionally, the functions of components of the electronic device 500 may be implemented in a single computing cluster or multiple computing machines capable of communicating over a communication connection. Thus, the electronic device 500 may operate in a networked environment using logical connections with one or more other server, network personal computers (PCs), or another network node.

The input device 550 may be one or more input device such as mouse, keyboard, trackball, or the like. The output device 560 may be one or more output devices, such as display, speaker, printer, or the like. The electronic device 500 may also communicate with one or more external device (not shown) such as storage device, display device, etc. through the communication unit 540 as needed, communicate with one or more device that enables a user to interact with the electronic device 500, or communicate with any device (e.g., a network card, a modem, etc.) that enables the electronic device 500 to communicate with one or more other electronic device. Such communication may be performed via an input/output (I/O) interface (not shown).

According to illustrative implementations of the present disclosure, there is provided a computer-readable storage medium having computer-executable instructions stored thereon, wherein the computer-executable instructions are executed by a processor to implement the method described above. According to illustrative implementations of the present disclosure, a computer program product is further provided, the computer program product being tangibly stored on a non-transitory computer-readable medium and include computer-executable instructions, the computer-executable instructions being executed by a processor to implement the method described above.

Various aspects of the present disclosure are described herein with reference to flowchart(s) and/or block diagram(s) of methods, apparatuses, devices, and computer program products implemented in accordance with the present disclosure. It should be understood that each of the block(s) of the flowchart(s) and/or block diagram(s) and combination(s) of respective blocks in the flowchart(s) and/or block diagram(s) may be implemented by computer-readable program instructions.

These computer-readable program instructions may be provided to a processing unit of a general purpose computer, a special purpose computer, or another programmable data processing apparatus to produce a machine, such that the instructions, when executed by a processing unit of a computer or another programmable data processing apparatus, produce means to implement the functions/actions specified in one or more block of the flowchart(s) and/or block diagram(s). These computer-readable program instructions, which cause the computer, the programmable data processing apparatus and/or the other device to operate in a particular manner, may also be stored in a computer-readable storage medium, such that the computer-readable medium storing instructions includes a manufactured article including instructions to implement various aspects of the functions/actions specified in one or more block of the flowchart(s) and/or block diagram(s).

The computer-readable program instructions may be loaded onto a computer, another programmable data processing apparatus, or another device, such that a series of operational steps are performed on the computer, the other programmable data processing apparatus, or the other device to produce a computer-implemented process, thereby enabling the instructions executed on the computer, the other programmable data processing apparatus, or the other device to implement the functions/actions specified in one or more blocks of the flowchart(s) and/or block diagram(s).

The flowchart(s) and block diagram(s) in the drawings show architecture(s), function(s), and operation(s) possibly implemented by system(s), method(s), and computer program product(s) according to multiple implementations of the present disclosure. In this regard, each block in the flowchart(s) or block diagram(s) may represent a module, a program segment, or a portion of instructions that includes one or more executable instruction for implementing specified logic function. In some alternative implementations, the functions noted in the blocks may also occur in a different order from that noted in the drawings. For example, two consecutive blocks may actually be performed substantially in parallel, or may sometimes be performed in a reverse order, depending on the functions involved. It is also noted that each block in the block diagram(s) and/or flowchart(s) as well as combination(s) of blocks in the block diagram(s) and/or flowchart(s) may be implemented with a dedicated hardware-based system that performs specified functions or actions, or may be implemented with a combination of dedicated hardware and computer instructions.

Various implementations of the present disclosure have been described above, which are illustrative and not exhaustive, and the implementations disclosed are not limiting. Many modifications and variations will be apparent to those ordinary skilled in the art without departing from the scope and spirit of the various implementations illustrated. The selection of the terms used herein is intended to best explain the principles, practical applications, or improvements to techniques in the marketplace of respective implementations, or to enable other ordinary skilled in the art to understand respective implementations disclosed herein.

## Claims

1. A method for live streaming interaction, the method comprising:
presenting an interactive interface element in a user interface of a live streaming if live streaming content in the live streaming satisfies a predetermined condition, the interactive interface element relating to a question-and-answer interaction; and
in response to detecting a predetermined operation on the interactive interface element, providing a streamer of the live streaming with interaction information corresponding to the question-and-answer interaction.

2. The method of claim 1, wherein presenting the interactive interface element in the user interface of the live streaming if the live streaming content in the live streaming satisfies the predetermined condition comprises:
if audio content of the live streaming comprises a predetermined voice password, presenting the interactive interface element in the user interface of the live streaming.

3. The method of claim 1, wherein presenting the interactive interface element in the user interface of the live streaming if the live streaming content in the live streaming satisfies the predetermined condition comprises:
if video content of the live streaming comprises video content corresponding to a predetermined posture, presenting the interactive interface element in the user interface of the live streaming.

4. The method of claim 1, wherein presenting the interactive interface element comprises:
presenting the interactive interface element in association with a display area corresponding to the streamer in the user interface.

5. The method of claim 1, wherein presenting the interactive interface element comprises:
determining a display area of the interactive interface element in the user interface based on a type of the live streaming content satisfying the predetermined condition; and
presenting the interactive interface element in the determined display area.

6. The method of claim 1, wherein the interaction information comprises area information corresponding to an audience user of the live streaming that triggers the predetermined operation.

7. The method of claim 1, wherein
the interactive interface element comprises at least one question-and-answer option, and the interaction information comprises interaction information corresponding to a selected question-and-answer option of the at least one question-and-answer option; or
the interactive interface element comprises at least one edit entry, and the interaction information comprises interaction information entered through the at least one edit entry.

8. The method of any of claims 1 to 7, further comprising:
presenting aggregated interaction information in the user interface of the live streaming, the aggregated interaction information being obtained by aggregating a plurality of pieces of the interaction information in the live streaming.

9. The method of claim 8, further comprising:
providing a resource recommendation related to the aggregated interaction information in the live streaming.

10. The method of claim 9, wherein the resource recommendation comprises at least one of the following:
recommendation of a topic, recommendation of a physical item or a virtual item.

11. An apparatus for live streaming interaction, the apparatus comprising:
an element presentation module configured to present an interactive interface element in a user interface of a live streaming if live streaming content in the live streaming satisfies a predetermined condition, the interactive interface element relating to a question-and-answer interaction; and
an interaction providing module configured to provide a streamer of the live streaming with interaction information corresponding to the question-and-answer interaction in response to detecting a predetermined operation on the interactive interface element.

12. An electronic device, comprising:
at least one processing unit; and
at least one memory coupled to the at least one processing unit and storing instructions for execution by the at least one processing unit, the instructions, when executed by the at least one processing unit, causing the device to perform the method of any of claims 1 to 10.

13. A computer-readable storage medium having stored thereon a computer program which, when executed by a processor, implements the method of any of claims 1 to 10.
